# EUROPEAN PATENT SPECIFICATION

(11) **EP 4 275 515 B1**
(45) Date of publication and mention of the grant of the patent: **01.10.2025**
(21) Application number: 23170097.2
(22) Date of filing: 26.04.2023
(51) Int. Cl.: A23L 29/244, A23L 33/21

(54) **A DIETARY FOOD PRODUCT FOR WEIGHT LOSS**
DIÄTETISCHES LEBENSMITTELPRODUKT FÜR GEWICHTSVERLUST
PRODUIT ALIMENTAIRE DIÉTÉTIQUE POUR PERTE DE POIDS

(30) Priority: 10.05.2022 UA 202201505
(43) Date of publication of application: 15.11.2023
(73) Proprietor: Kurchenko, Oleg Volodimirovich, 08700 Obukhiv Kyivska (UA); Sokhar, Orest Tarasovich, 01133 Kyiv (UA)
(72) Inventor: Kurchenko, Oleg Volodimirovich, 08700 Obukhiv Kyivska (UA); Sokhar, Orest Tarasovich, 01133 Kyiv (UA)
(74) Representative: Benatov, Samuil Gabriel

(56) References cited:
- WO-A1-2021/092691
- US-A1- 2021 161 157
- US-B2- 10 555 537
- DAROOGHEGI MOFRAD MANIJE ET AL: "The effects of psyllium supplementation on body weight, body mass index and waist circumference in adults: A systematic review and dose-response meta-analysis of randomized controlled trials", CRITICAL REVIEWS IN FOOD SCIENCE AND NUTRITION, vol. 60, no. 5, 18 March 2019 (2019-03-18), USA, pages 859 - 872, XP093047490, ISSN: 1040-8398, DOI: 10.1080/10408398.2018.1553140
- KAATS GILBERT R. ET AL: "Konjac Glucomannan Dietary Supplementation Causes Significant Fat Loss in Compliant Overweight Adults", 22 October 2015 (2015-10-22), US, pages 1 - 7, XP093047485, ISSN: 0731-5724, Retrieved from the Internet <URL:https://www.researchgate.net/profile/Debasis-Bagchi/publication/283206713_Konjac_Glucomannan_Dietary_Supplementation_Causes_Significant_Fat_Loss_in_Compliant_Overweight_Adults/links/563135d208ae0530378d1457/Konjac-Glucomannan-Dietary-Supplementation-Causes-Significant-Fat-Loss-in-Compliant-Overweigh> DOI: 10.1080/07315724.2015.1009194

## Description

### FIELD OF THE INVENTION

The invention relates to dietary products with low nutritional value, namely those that are mostly indigestible.

### BACKGROUND OF THE INVENTION

Foods with low nutritional value usually contain water-soluble fiber. Soluble fiber facilitates healthy digestion by reducing constipation and normalizing intestinal peristalsis, can help to reduce cholesterol level, satiate hunger and maintain healthy blood sugar levels.

The sources of water-soluble fiber can be psyllium and glucomannan.

Psyllium is a husk or flour from the husk of plantain flea (plantago psyllium L.). Other names are sometimes used: ispaghula, ispaghol. The center of its industrial production is mainly the Indian state of Gujarat (https://lchf.ru/1664).

Glucomannan is a natural substance derived from the root of Amorphophallus konjac, which is grown in Vietnam and China. (https://russiaherb.com/glyukomannan/).

The mechanism of action of these products in satiating hunger is very simple. Psyllium and glucomannan are fibers that are not absorbed or processed in the body. That is, these products have no nutritional value, they are "empty" for the body. Upon contact with water and any other liquids (tea, soup, etc.), they swell, increasing several times in size. Due to this, a bulky food lump is formed in the stomach, which causes a feeling of satiety even after consuming a small amount of these products with liquid.

The effect of psyllium and glucomannan for weight loss is also known from
DAROOGHEGI MOFRAD MANIJE ET AL: "The effects of psyllium supplementation on body weight, body mass index and waist circumference in adults: A systematic review and dose-response meta-analysis of randomized controlled trials", CRITICAL REVIEWS IN FOOD SCIENCE AND NUTRITION, vol. 60, no. 5, 18 March 2019 (2019-03-18), pages 859-872, XP093047490, USA, ISSN: 1040-8398, DOI: 10.1080/10408398.2018.1553140, and
KAATS GILBERT R. ET AL: "Konjac Glucomannan Dietary Supplementation Causes Significant Fat Loss in Compliant Overweight Adults", JOURNAL OF THE AMERICAN COLLEGE OF NUTRITION, 22 October 2015 (2015-10-22), pages 1-7, XP093047485, US.

Compositions with psyllium and/or glucomannan can be consumed 1) as dietary supplements in the form of powder, granules, tablets, gelatin capsules filled with powder or granules, etc., 2) in the composition of food products including those that serve as food substitutes.

WO 2016/085322 discloses dietary fiber composition containing, wt. %:

| | |
|---|---|
| glucomannan | 30.0-50.0 |
| carrageenan | 15.0-25.0 |
| xanthan gum | 10.0-25.0 |
| salts with monovalent or divalent cation | 10.0-30.0. |

This composition may be in the form of a capsule, a tablet, powder, syrup, solution, suspension, sachet or cocktail. The composition can also be used in a food product, in particular in a food substitute.

US 2021/161157 A1 discloses a baked crisp product comprising a binder component in an amount of from 0.1 to 5% by total dry component weight and the binder comprising psyllium in an amount of from 50 to 100% w/w and may further comprise konjac in an amount of 0 to 50% w/w (par. 133) of the binder component. The product may comprise pumpkin seeds.

US 10 555 537 B2 discloses a low-carbohydrate crispbread also relating to biscuits, cakes, snacks, bars, crackers or flat cakes. The product may comprise partially deoiled pumpkin seed flour as well as psyllium. In one example the product comprises 40g (17 w% of dry matter) of partially deoiled pumpkin seed flour and 30 g (13 wt% of dry matter) of psyllium husks.

WO2009/015475 discloses a food product comprising a fiber bland, wherein the fiber bland comprises 48-90 wt. % of glucomannan, 5-20 wt.% of xanthan gum and 5-30 wt.% of alginate.

WO2021092691 discloses a dietary composition comprising 40-80 wt. % of fiber composition and 10-60 wt. % of psyllium. The fiber composition contains 50-90 wt. % of glucomannan, 5-20 wt.% of xanthan gum and 5-30 wt.% of alginate. The fiber composition and psyllium are granular. The composition can also be used in a food product that serves as a food substitute.

The disadvantages of compositions with psyllium and/or glucomannan in powder or granular form are as follows:
- difficulty of mixing with liquid (lumps are formed, the process is long and the resulting mass is heterogeneous);
- lack of pleasant taste, especially when mixed with water, and the need to swallow a heterogeneous paste without a distinct taste;
- the need to eat food other than this paste because the latter is not perceived as food at the level of consciousness, which partially offsets the effect.

Therefore, this dietary composition can be combined with any type of food product, including solid, liquid, or semi-solid food products. In particular, the resulting food product may be 1) bread with the baked dietary composition, 2) pumpkin seed milk mixed with a dietary composition.

There are problems with the use of psyllium and/or glucomannan in food products. WO 2015/069814 discloses a food product in the form of a psyllium-containing bar for snacking on. The document states that many consumers who eat the psyllium-containing bars for snacking on do not find these products organoleptically acceptable. After chewing and contact with consumer saliva psyllium in bars for snacking on can become viscous and grainy, as well as have an unacceptable taste. Psyllium can also get stuck in a consumer's teeth and can cover a layer of his mouth. It can be difficult to remove the remainder of the psyllium from the teeth and mouth. Therefore, the object of the invention was to provide a bar for snacking on that contains psyllium and is organoleptically acceptable.

The developed bar can weigh 20-100 g and contains 1-5 g of psyllium. As an additional source of fiber the bar may contain glucomannan and occupy part of the psyllium in the specified 1-5 g. That is, the content of psyllium and glucomannan in the bar is 1-25 wt. %. The remaining 75-99 wt. % are the ingredients that make the bar organoleptically acceptable. These may include grains and seeds, such as oats, barley, wheat, wheat bran, rye, rice, including husked rice, Spanish sage, buckwheat, orach, Amaranthus, flax, Faro sunflower, corn, triticale, Abyssinian wheatgrass and combinations thereof. Grains and seeds may be whole, in the form of bran, rolled, flattened or processed in any suitable way. Grains and seeds may also be whole grain products, which may include whole wheat flour, oat flakes, oat groats, triticale flour, popcorn and teff flour.

The composition of the bar may include sugar and dried fruit, and in its manufacture molasses and plasticizers are used. The bar is not baked, since baking can cause physical and chemical reactions that can change the physical and chemical properties of the ingredients. For example, baking can change the taste of some ingredients.

Depending on the composition and weight of the ingredients, the bar can contain from 80 to 300 kcal. When consuming a bar, it is necessary to take at least a full glass of any hot or cold drink.

Therefore, the disadvantages of the known food product in the form of a bar for snacking on include:
the content of ingredients that make the product organoleptically acceptable, in the amount that usually exceeds the total mass of soluble fiber in the form of psyllium and glucomannan; high energy value per 1 g of psyllium;
the need to make bars of different weights to ensure entry into the human body for one intake of the calculated amount of soluble fiber;
the need to use plasticizers when manufacturing;
impossibility of application baking operations in the technology of making.

### SUMMARY OF THE INVENTION

The object of the invention is to provide a food product for weight loss with psyllium and glucomannan, which contains a minimum content of ingredients that make it organoleptically acceptable, has low energy value, provides the intake of a given amount of soluble fiber into the human body at a time, and can be made using baking without deterioration of the organoleptic properties of the product.

In a dietary food product for weight loss, which consists of psyllium, glucomannan and an ingredient that makes it organoleptically acceptable, the object is achieved by the fact that as the ingredient that makes it organoleptically acceptable the dietary food product for weight loss includes powdered pumpkin seeds and is a baked crispbread consisting of 0.15-0.90 g of psyllium, 0.01-0.12 g of glucomannan, 0.14-0.98 g of powdered pumpkin seeds, and having weight of 0.3 -2.0 g and energy value of 0.78 - 5.45 kcal.

Preferably the dietary food product is in the form of chips, and the chips have a flat round shape with a diameter of about 3-3.5 cm, their edges are mostly sharp, and on one or both sides they have convexities.

### DETAILED DESCRIPTION OF THE INVENTION

The table shows examples of the content of ingredients in the dietary food product in the form of a crispbread in accordance with the invention, as well as the energy value of crispbreads.

| Ingredients | Examples | | | | | | |
|---|---|---|---|---|---|---|---|
| | 1 | 2 | 3 | 4 | 5 | 6 | 7 |
| | Content per a crispbread, g | | | | | | |
| psyllium | 0,15 | 0,25 | 0,32 | 0,48 | 0,62 | 0,70 | 0,90 |
| glucomannan | 0,01 | 0,02 | 0,03 | 0,05 | 0,07 | 0,09 | 0,12 |
| powdered pumpkin seeds | 0,14 | 0,23 | 0,35 | 0,47 | 0,61 | 0,71 | 0,98 |
| Total | 0,3 | 0, 5 | 0,7 | 1,0 | 1,3 | 1.5 | 2,0 |
| | Energy value, kcal | | | | | | |
| | 0,78 | 1,29 | 1,95 | 2,61 | 3,39 | 3,95 | 5,45 |

According to one example, the product for weight loss is made as follows. Ingredients are taken in the right proportions and mixed to obtain a mixture. For obtaining, for example, 1,000,000 crispbreads weighing 0.5 g, each of which contains 0.25 g of psyllium, 0.02 g of glucomannan and 0.23 g of powdered pumpkin seeds (the composition of the crispbread of example 2), 250.0 kg of psyllium, 20.0 kg of glucomannan and 230.0 kg of powdered pumpkin seeds are taken in the form of flour and are mixed. Water is added to the resulting mixture and the dough is prepared. If necessary, the calculated amount of salt can be added.

The dough is extruded through a matrix, divided into 1,000,000 flat pieces and placed on a baking sheet. Baking sheets with the flat pieces are placed in the oven where the crispbreads are baked at temperature of 180-2800°C for 1-10 minutes. They have a flat round shape with a diameter of about 3-3.5 cm. Their edges are mostly sharp, and on one or both sides they may have convexities due to cavities inside the crispbreads. In appearance, the crispbreads resemble chips, but they are obtained by extruding and dividing the flat piece and, accordingly, the finished crispbreads may have another shape, such as a non-flat piece. Depending on the weight of crispbreads and the volume of the oven, the temperature and baking time can be selected.

The energy value of the crispbreads indicated in the table is due only to the presence of powdered pumpkin seeds, since psyllium and glucomannan are not absorbed by the body. The energy value is easily calculated based on the fact that the caloric content of pumpkin seeds is 556 kcal per 100 g of seeds (https://hudnemo.com/kalorijnist-nasinnjachok/).

The crispbreads with a certain weight are made separately from the crispbreads with a different weight. For example, making the crispbreads weighing 0.5 g means that the weight of each made crispbread should not deviate significantly from 0.5 g. In this case, the content of soluble fiber in the form of psyllium and glucomannan per gram and its energy value are known. This information may be indicated on the packaging. Polypropylene bags can be used as packaging for the crispbreads. The bag may contain a quantity of crispbreads that corresponds to the weight of soluble fiber consumed per food intake. For example, when 15 g of soluble fiber is consumed per food intake and the weight of one crispbread is 0.5 g, the bag contains 55 crispbreads. The energy value of this portion of crispbreads is 71 kcal. The bag may contain more crispbreads for consumption in certain portions. The package must indicate that the crispbreads must be consumed with enough liquid.

Crispbreads can be consumed as a meal replacement. In this case, instead of one meal a day, the consumer eats, for example, 55 crispbreads with the simultaneous consumption of a liquid, such as soup, water, tea, beverage, etc., in a volume of at least 250 ml. Crispbreads can be consumed as a dietary supplement to regular meals. In this case, the consumer can eat two or three times a day, for example, 18-20 crispbreads weighing 0.5 g to get 5 g of water soluble fiber in the form of psyllium and glucomannan.

In the stomach psyllium and glucomannan in contact with the liquid for 10-15 minutes swell and fill the stomach, causing the feeling of satiety. Due to the fact that the weight of crispbreads does not exceed 2.0 g, when consumed with liquid the crispbreads do not have time to swell and linger in the mouth and esophagus.

The use of powdered pumpkin seeds in crispbreads with psyllium and glucomannan has the following advantages:
- manufacturing of crispbreads does not require any additives, including plasticizers;
- when baking crispbreads, their organoleptic properties are not deteriorated, but improved, in particular, they have the taste and smell of roasted pumpkin seeds, are crispy and easy and quick to chew,
- powdered pumpkin seeds occupy no more than half of a crispbread weight and is the only ingredient (if no salt is added during manufacture), which gives it acceptable organoleptic properties;
- the crispbread has an energy value of about 5 kcal per 1 g of psyllium and glucomannan, while in the bar described above, it is 60-80 kcal;
- due to the fact that the crispbread weight is small and the content of soluble fiber in the form of psyllium and glucomannan in one crispbread is known, the consumer can determine the amount of crispbreads he needs to eat at a time to get a certain amount of soluble fiber;
- pumpkin seeds themselves are a source of fiber which contains many nutrients: iron, manganese, phosphorus, copper, zinc, selenium, calcium, magnesium, potassium, niacin, amino acids (folic acid), resins, essential oils, vitamin E and, in small quantities, vitamins A, C, D, K and group B.

The dietary food product according to the invention reduces the absorption of fats and carbohydrates in the intestine, reduces the total energy value of the diet, thereby ensuring a safe process of weight loss when used properly (3-4 kg per month).

## Claims

1. A dietary food product for weight loss consisting of psyllium, glucomannan and an ingredient that makes it organoleptically acceptable, **characterized in that** as the ingredient that makes it organoleptically acceptable the dietary food product includes powdered pumpkin seeds, and the dietary food product is a baked crispbread consisting of 0.15-0.90 g of psyllium, 0.01-0.12 g of glucomannan and 0.14-0.98 g of powdered pumpkin seeds, and having weight of 0.3 -2.0 g and energy value of 0.78-5.45 kcal.

2. The dietary food product for weight loss according to claim 1, **characterized in that** it is in the form of chips, wherein the chips have a flat round shape with a diameter of about 3-3.5 cm, their edges are mostly sharp, and on one or both sides they have convexities.

## Patentansprüche

1. Diätetisches Lebensmittelprodukt zur Gewichtsabnahme, bestehend aus Psyllium, Glucomannan und einer Zutat, die es organoleptisch akzeptabel macht, **dadurch gekennzeichnet, dass** die Zutat, die es organoleptisch akzeptabel macht, aus gemahlenen Kürbiskernen besteht und dass das diätetische Lebensmittelprodukt ein gebackenes Knäckebrot ist, das 0,15-0,90 g Psyllium, 0,01-0,12 g Glucomannan und 0,14-0,98 g gemahlene Kürbiskerne enthält, ein Gewicht von 0,3-2,0 g und einen Brennwert von 0,78-5,45 kcal aufweist.

2. Diätetisches Lebensmittelprodukt zur Gewichtsabnahme nach Anspruch 1, **dadurch gekennzeichnet, dass** es in Form von Chips vorliegt, wobei die Chips eine flache, runde Form mit einem Durchmesser von etwa 3-3,5 cm haben, ihre Ränder überwiegend scharf sind und sie auf einer oder beiden Seiten Wölbungen aufweisen.

## Revendications

1. Produit alimentaire diététique pour la perte de poids composé de psyllium, de glucomannane et d'un ingrédient qui le rend acceptable sur le plan organoleptique, **caractérisé en ce que** l'ingrédient qui le rend acceptable sur le plan organoleptique est constitué de graines de courge en poudre, et **en ce que** le produit alimentaire diététique est un pain croustillant cuit au four comprenant de 0,15 à 0,90 g de psyllium, de 0,01 à 0,12 g de glucomannane et de 0,14 à 0,98 g de graines de courge en poudre, ayant un poids de 0,3 à 2,0 g et une valeur énergétique de 0,78 à 5,45 kcal.

2. Produit alimentaire diététique pour la perte de poids selon la revendication 1, **caractérisé en ce qu'**il se présente sous forme de chips, celles-ci ayant une forme ronde et plate d'environ 3 à 3,5 cm de diamètre, leurs bords étant pour la plupart tranchants et présentant, sur une ou deux faces, des convexités.
